# NEUE EUROPÄISCHE PATENTSCHRIFT

(11) **EP 1 862 689 B2**
(45) Veröffentlichungstag und Bekanntmachung des Hinweises auf die Entscheidung über den Einspruch: **04.11.2015**
(45) Hinweis auf die Patenterteilung: 28.11.2012
(21) Anmeldenummer: 07010002.9
(22) Anmeldetag: 19.05.2007
(51) Int. Cl.: F16D 21/06

(54) **Drehmomentübertragungsanordnung für den Antriebsstrang eines Fahrzeugs**
Torque transmission assembly for the power transmission of a vehicle
Agencement de transmission d'un couple de rotation pour le conducteur de commande d'un véhicule

(30) Priorität: 01.06.2006 DE 102006025528
(43) Veröffentlichungstag der Anmeldung: 05.12.2007
(73) Patentinhaber: ZF Friedrichshafen AG, 88046 Friedrichshafen (DE)
(72) Erfinder: Orlamünder, Andreas, 97453 Schonungen (DE); Vogt, Sebastian, 97616 Bad Neustadt (DE); Kühner, Michael, 97523 Schwanfeld (DE)

(56) Entgegenhaltungen:
- WO-A-2007/000151
- WO-A-2007/062618
- WO-A-2007/083022
- DE-A1- 10 012 808
- DE-A1- 10 149 700

## Beschreibung

Die vorliegende Erfindung betrifft eine Drehmomentübertragungsanordnung für den Antriebsstrang eines Fahrzeugs, umfassend eine Doppelkupplungsanordnung mit einer zentralen Widerlagerplatte und an beiden axialen Seiten der Widerlagerplatte jeweils einer Druckplattenbaugruppe, wobei jede Druckplattenbaugruppe ein an der Widerlagerplatte festgelegtes oder festzulegendes Gehäuse, eine bezüglich des Gehäuses im Wesentlichen drehfest und axial bewegbar gehaltene Anpressplatte, sowie eine bezüglich der Anpressplatte und des Gehäuses abgestützte Kraftbeauschlagungsanordnung umfasst, ferner umfassend für jede Druckplattenbaugruppe eine an ein Abtriebsorgan angekoppelte oder anzukoppelnde Kupplungsscheibe, welche bei Beaufschlagung der Anpressplatte durch die Kraftbeaufschlagungsanordnung gegen die Widerlagerplatte pressbar ist, und eine Schwungmassenanordnung, über welche ein Drehmoment zwischen einem Antriebsorgan und der Doppelkupplungsanordnung zu übertragen ist.

Eine derartige Drehmomentübertragungsanordnung ist aus der DE 100 12 808 A1 bekannt. Die Doppelkupplungsanordnung dieser bekannten Drehmomentübertragungsanordnung ist im Bereich eines Bauteils, das als Gehäuse einer antriebsseitig bezüglich einer zentralen Widerlagerplatte angeordneten Druckplattenbaugruppe interpretiert werden kann, an eine Schwungmassenanordnung, hier ausgebildet als Zweimassenschwungrad, fest angekoppelt. Dieses Zweimassenschwungrad wiederum ist im Bereich einer Primärseite desselben an eine Antriebswelle, beispielsweise eine Kurbelwelle einer Brennkraftmaschine, fest angekoppelt oder anzukoppeln. Abtriebsseitig sind die beiden Kupplungsscheiben der Doppelkupplungsanordnung jeweils an koaxial zueinander liegende Getriebeeingangswellen angekoppelt und somit zur Drehmomentübertragung mit diesen Getriebeeingangswellen verbunden. Zum Einrücken bzw. Ausrücken werden die beiden Druckplattenbaugruppen über den jeweiligen Kraftbeaufschlagungsanordnungen zugeordnete Betätigungsanordnungen betätigt, wobei jede dieser Betätigungsanordnungen am radial inneren Bereich der jeweils zugeordneten Kraftbeaufschlagungsanordnung angreift.

Es ist die Aufgabe der vorliegenden Erfindung, eine gattungsgemäße Drehmomentübertragungsanordnung so weiterzubilden, dass bei einfacher Montierbarkeit die Möglichkeit eines Toleranzausgleichs in einem Antriebsstrang bereitgestellt ist.

Erfindungsgemäß wird diese Aufgabe gelöst durch eine Drehmomentübertragungsanordnung für den Antriebsstrang eines Fahrzeugs, umfassend eine Doppelkupplungsanordnung mit einer zentralen Widerlagerplatte und an beiden axialen Seiten der Widerlagerplatte jeweils einer Druckplattenbaugruppe, wobei jede Druckplattenbaugruppe ein an der Widerlagerplatte festgelegtes oder festzulegendes Gehäuse, eine bezüglich des Gehäuses im Wesentlichen drehfest und axial bewegbar gehaltene Anpressplatte und eine bezüglich der Anpressplatte und des Gehäuses abgestützte Kraftbeaufschlagungsanordnung umfasst, ferner umfassend in Zuordnung zu jeder Druckplattenbaugruppe eine an ein Antriebsorgan angekoppelte oder anzukoppelnde Kupplungsscheibe, welche bei Beaufschlagung der Anpressplatte durch die Kraftbeaufschlagungsanordnung gegen die Widerlagerplatte pressbar ist, und eine Schwungmassenanordnung, über welche ein Drehmoment zwischen einem Antriebsorgan und der Druckplattenbaugruppe zu übertragen ist.

Dabei ist dann weiter vorgesehen, dass das Gehäuse der antriebsseitig bezüglich der Widerlagerplatte positionierten oder zu positionierenden Druckplattenbaugruppe über eine eine Relativaxialbewegung zwischen der Schwungmassenanordnung und der Druckplattenbaugruppe zulassende Kopplungsanordnung mit der Schwungmassenanordnung gekoppelt oder koppelbar ist.

Durch das Bereitstellen einer eine Axialrelativbewegbarkeit im Bereich der Drehmomentübertragungsanordnung zulassenden Verbindung zwischen den beiden elementaren Systembereichen derselben können im Antriebsstrang auftretende Axialtoleranzen leicht ausgeglichen werden. Weiter wird dabei durch das Vermeiden von Zwängungen oder dergleichen bei an sich axial starren Systemen der Vorgang des Aufbaus eines Antriebsstrangs deutlich leichter durchführbar.

Die Kopplungsanordnung umfasst eine Mehrzahl von an der Schwungmassenanordnung und dem Gehäuse der antriebsseitigen Druckplattenbaugruppe festgelegten und dazwischen axial elastisch verformbaren Kopplungselementen, wobei die Kopplungselemente blattfederartig ausgebildet sein können. Bei dieser Ausgestaltung wird also eine feste Anbindung zwischen der Doppelkupplungsanordnung und der Schwungmassenanordnung realisiert, wobei gleichzeitig jedoch auf Grund der axial elastischen Ausführung der Kopplungselemente das gewünschte Axialbewegungsspiel bereitgestellt wird.

Um den Gesamtaufbau einer erfindungsgemäßen Anordnung möglichst einfach zu gestalten, ist vorgesehen, dass die Kopplungselemente durch Bolzen an dem Gehäuse festgelegt sind, welche ferner der axialen Halterung der Kraftbeaufschlagungsanordnung bezüglich des Gehäuses dienen. Auf diese Art und Weise werden zwei Funktionalitäten, nämlich die axiale Halterung der Kraftbeaufschlagungsanordnung einerseits und die Anbindung der Kopplungselemente andererseits, in eine Gruppe von Bauteilen, nämlich die allgemein als Distanzbolzen bezeichneten Bauteile, integriert.

Bei einer nicht erfindungsgemäßen aber ebenfalls offenbarten Ausgestaltung wird vorgeschlagen, dass die Kopplungsanordnung an der Schwungmassenanordnung und dem Gehäuse der antriebsseitigen Druckplattenbaugruppe axial ineinander einschiebbare und axial bezüglich einander verschiebbare Verzahnungen umfasst.

Die Doppelkupplungsanordnung einer erfindungsgemäßen Drehmomentübertragungsanordnung weist vor allem auf Grund des Bereitstellens zweier Druckplattenbaugruppen eine vergleichsweise große Gesamtmasse auf. Um insbesondere auch dann, wenn erfindungsgemäß eine gewisse Bewegbarkeit dieser Doppelkupplungsanordnung im Antriebsstrang vorgesehen sein soll, gleichwohl für eine stabile Positionierung sorgen zu können, wird weiter vorgeschlagen, dass die Widerlagerplatte in einem radial inneren Bereich einen Lagerungsabschnitt aufweist, in welchem diese an einem an eine der Kupplungsscheiben angekoppelten oder anzukoppelnden Abtriebsorgan drehbar gelagert ist. Dies bringt den wesentlichen Vorteil mit sich, dass die gesamte Doppelkupplungsanordnung nicht bzw. nicht nur an einem axialen Ende, nämlich dort wo die Anbindung an die Schwungmassenanordnung erfolgt, zentriert, also gegen radiale Ausweichbewegungen gehalten ist, sondern dass ein wesentlicher Aspekt dieser Halterungsfunktion in den axial zentralen Bereich der gesamten Doppelkupplungsanordnung verlegt wird, so dass das Auftreten von Ausweichbewegungen oder Taumelbewegungen im Rotationsbetrieb weitestgehend unterbunden werden kann.

Um den Aufbau eines Antriebsstrangs mit einer erfindungsgemäßen Drehmomentübertragungsanordnung weiter erleichtern zu können, wird vorgeschlagen, dass das Gehäuse der antriebsseitigen Druckplattenbaugruppe in einem die Widerlagerplatte radial außen übergreifenden Bereich an dieser festgelegt oder festzulegen ist. Auf diese Art und Weise ist es nicht erforderlich, in axialer Richtung zwischen verschiedene Komponenten eingreifen zu müssen, was auf Grund der beschränkten Bauräume oftmals nur schwer möglich ist, sondern das Festlegen kann von radial außen her erfolgen.

Bei dem erfindungsgemäßen Aufbau kann vorgesehen sein, dass die Schwungmassenanordnung ein Zweimassenschwungrad mit einer an dem Antriebsorgan festzulegenden oder festgelegten Primärseite und einer mit dem Gehäuse der antriebsseitigen Druckplattenbaugruppe über die Kopplungsanordnung gekoppelten oder zu koppelnden Sekundärseite sowie einer zwischen Primärseite und Sekundärseite wirkenden Dämpferelementenanordnung umfasst.

Ferner wird zum Bereitstellen eines sehr kompakten Aufbaus weiterhin vorgeschlagen, dass für jede Druckplattenbaugruppe eine auf die Kraftbeaufschlagungsanordnung derselben einwirkende Betätigungsanordnung vorgesehen ist, wobei die Betätigungsanordnung für die antriebsseitige Druckplattenbaugruppe ein Betätigungsorgan umfasst, das in einem an die Kupplungsscheibe für diese Druckplattenbaugruppe angekoppelten oder anzukoppelnden Antriebsorgan bewegbar ist.

Wie bereits vorangehend dargelegt, ist es ein wesentliches Ziel beim Aufbau derartiger Drehmomentübertragungsanordnungen, diese so zu gestalten, dass der Aufbau eines Antriebsstrangs leicht durchgeführt werden kann. Aus diesem Grund wird erfindungsgemäß weiter vorgeschlagen, dass die Drehmomentübertragungsanordnung in zwei Vormontagebaugruppen unterteilt ist, wobei eine erste Vormontagebaugruppe die Schwungmassenanordnung und die antriebsseitige Druckplattenbaugruppe umfasst und eine zweite Vormontagebaugruppe die Widerlagerplatte und die abtriebsseitige Druckplattenbaugruppe umfasst.

Ferner betrifft die vorliegende Erfindung ein Verfahren zum Aufbau eines Antriebsstrangs für ein Fahrzeug, welcher Antriebsstrang ein Antriebsaggregat mit einer Antriebswelle, eine Getriebeanordnung mit zwei Getriebeeingangswellen und eine erfindungsgemäße Drehmomentübertragungsanordnung zur Drehmomentübertragung zwischen der Antriebswelle und den Getriebeeingangswellen umfasst. Bei diesem erfindungsgemäßen Verfahren sind die folgenden Maßnahmen vorgesehen:
a) Ankoppeln der ersten Vormontagebaugruppe im Bereich der Schwungmassenanordnung an die Antriebswelle;
b) Ankoppeln der zweiten Vormontagebaugruppe an eine der Getriebeeingangswellen;
c) nach Durchführung der Maßnahmen a) und b), Verbinden des Gehäuses der Druckplattenbaugruppe der ersten Vormontagebaugruppe mit der Widerlagerplatte und Ankoppeln der Kupplungsscheibe für die Druckplattenbaugruppe der ersten Vormontagebaugruppe an die andere Getriebeeingangswelle.

Mit dieser Vorgehensweise wird es leicht möglich, die verschiedenen Vormontagebaugruppen mit dem Antriebsaggregat einerseits und dem Getriebe andererseits zu koppeln, wobei hier auf Grund der Tatsache, dass diese beiden Vormontagebaugruppen noch voneinander getrennt sind, auch in radial inneren Bereichen axialer Zugriff auf zum Festlegen erforderliche Organe, wie z.B. Schrauben, vorhanden ist. Erst dann, wenn diese Festlegung erreicht ist, wird die Doppelkupplungsanordnung und damit der gesamte Antriebsstrang zusammengefasst.

Es sei hier betont, dass diese Vorgehensweise vor allem dann vorteilhaft ist, wenn die antriebsseitige Druckplattenbaugruppe über ihr Gehäuse mit der Schwungmassenanordnung in der vorangehend beschriebenen, eine Axialrelativbewegung zulassenden Art und Weise gekoppelt ist. Gleichwohl kann selbstverständlich diese Vorgehensweise auch eingesetzt werden, wenn in der ersten Vormontagebaugruppe eine im Wesentlichen starre und keine Axialrelativbewegung zulassende Verbindung zwischen dem Gehäuse und der Schwungmassenanordnung realisiert ist. Bei derartigem Aufbau könnte dann in anderen Bereichen für die vorteilhafte und einen Toleranzausgleich zulassende Axialbewegbarkeit gesorgt werden, beispielsweise im Bereich der Ankopplung der Schwungmassenanordnung an das Antriebsorgan.

Bei diesem Verfahren kann ferner vorgesehen sein, dass die Maßnahme b) das Ankoppeln der Kupplungsscheibe für die Druckplattenbaugruppe der zweiten Vormontagebaugruppe an die eine Getriebeeingangswelle und das Herstellen einer Lagerungsabstützung der Widerlagerplatte an dieser Getriebeeingangswelle umfasst.

Die vorliegende Erfindung wird nachfolgend mit Bezug auf die beiliegenden Zeichnungen detailliert beschrieben. Es zeigt:
- Fig. 1: eine Teil-Längsschnittansicht einer erfindungsgemäß aufgebauten Drehmomentübertragungsanordnung;
- Fig. 2: eine erste Vormontagebaugruppe der in Fig. 1 dargestellten Drehmomentübertragungsanordnung;
- Fig. 3: eine Zwischenphase beim Aufbau eines Antriebsstrangs;
- Fig. 4: eine Detailansicht einer Doppelkupplungsanordnung mit alternativem Aufbau;
- Fig. 5: eine Schnittansicht längs einer Linie V - V in Fig. 4;
- Fig. 6: eine der Fig. 1 entsprechende Ansicht einer alternativen Ausgestaltungsart einer Drehmomentübertragungsanordnung.

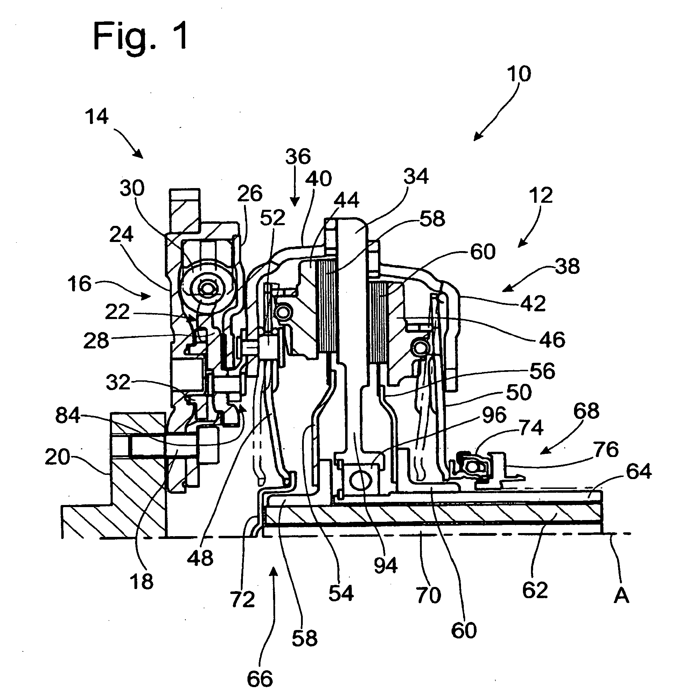

In Fig. 1 ist eine Drehmomentübertragungsanordnung für einen Antriebsstrang eines Kraftfahrzeugs allgemein mit 10 bezeichnet. Diese Drehmomentübertragungsanordnung 10 umfasst als ihre beiden wesentlichen Systembereiche eine Doppelkupplungsanordnung 12 und eine Schwungmassenanordnung in Form eines Zweimassenschwungrads 14.

Das Zweimassenschwungrad 14 kann von herkömmlichem Aufbau sein und eine Primärseite 16 aufweisen, die in ihrem radial inneren Bereich durch Schraubbolzen 18 an eine als Antriebsorgan wirksame Antriebswelle 20, beispielsweise Kurbelwelle einer Brennkraftmaschine, zur gemeinsamen Drehung um eine Drehachse A angebunden ist. Eine Sekundärseite 22 des Zweimassenschwungrades 14 ist in nachfolgend noch beschriebener Art und Weise mit der Doppelkupplungsanordnung 12 zur gemeinsamen Drehung um die Drehachse A verbunden.

Die Primärseite 16 des Zweimassenschwungrads 14 umfasst zwei Deckscheibenelemente 24, 26, von welchen das Deckscheibenelement 24 durch die bereits angesprochenen Schraubbolzen 18 an die Antriebswelle 20 angebunden ist. Das Deckscheibenelement 26 ist radial außen mit einem axialen Ansatz des Deckscheibenelements 24 beispielsweise durch Verschweißung fest verbunden. Ein Zentralscheibenelement 28 der Sekundärseite 22 greift in den zwischen den beiden Deckscheibenelementen 24, 26 gebildeten Zwischenraum ein und ist über eine Mehrzahl von Dämpferfedern 30 mit den Deckscheibenelementen 24, 26 gekoppelt. Ferner sind am Deckscheibenelement 24 mehrere Planetenräder bzw. Zahnräder 32 drehbar gelagert, die mit einer als Hohlrad wirksamen Verzahnung des Zentralscheibenelements 28 in Kämmeingriff stehen, so dass bei Relativverdrehung der Primärseite 16 bezüglich der Sekundärseite 22 auch diese Planetenräder 32 in Drehung versetzt werden. Weiterhin ist der zwischen den beiden Deckscheibenelementen 24, 26 gebildete Raum, in welchen also das Zentralscheibenelement 28 eingreift und in welchem auch die Planetenräder 32 liegen, durch verschiedene am Zentralscheibenelement 28 angreifende Abschlussorgane fluiddicht abgeschlossen, so dass darin enthaltenes viskoses Medium nicht austreten kann.

Es sei hier noch einmal betont, dass das Zweimassenschwungrad 14 nur hinsichtlich seines grundsätzlichen Aufbaus beschrieben worden ist und selbstverständlich in verschiedenen Aspekten variiert werden kann, beispielsweise durch zusätzliches Bereitstellen einer Reibanordnung.

Die Doppelkupplungsanordnung 12 umfasst eine darin axial zentral angeordnete Widerlagerplatte 34. An beiden Seiten dieser Widerlagerplatte 34 ist jeweils eine Druckplattenbaugruppe 36 bzw. 38 der Doppelkupplungsanordnung 12 vorgesehen. Jede dieser Druckplattenbaugruppen 36, 38 umfasst ein Gehäuse 40 bzw. 42 mit einer darin angeordneten Anpressplatte 44 bzw. 46. Wie bei herkömmlichen Reibungskupplungen auch, kann die Anpressplatte 44 bzw. 46 mit dem zugeordneten Gehäuse 40 bzw. 42 durch Tangentialblattfedern gekoppelt sein, welche eine im Wesentlichen drehfeste Anbindung der jeweiligen Anspressplatte 44, 46 an das zugehörige Gehäuse 40, 42 bei gleichwohl ermöglichter Relativaxialbewegung zulassen. Ferner kann durch derartige Tangentialblattfedern bereits eine Axialvorspannung für die Anpressplatte 44 bzw. 46 vorgesehen sein, und zwar, je nach Bauweise, entweder auf die Widerlagerplatte 34 zu oder von dieser weg.

Jede der Druckplattenbaugruppen 36, 38 umfasst ferner eine Kraftbeaufschlagungsanordnung 48, 50. Diese können nach Art von Membranfedern ausgebildet sein mit einem radial äußeren ringartigen Bereich und nach radial innen greifenden Federzungen und können weiterhin so gestaltet sein, dass sie in einer Richtung vorgespannt eingebaut sind bzw. eingebaut werden können, und zwar vorgespannt entweder derart, dass die jeweils zugehörige Anpressplatte 44 oder 46 in Richtung auf die Widerlagerplatte 34 zu vorgespannt ist, oder dass eine Vorspannung der Kraftbeaufschlagungsanordnung 48 oder 50 in entgegengesetzter Richtung, also in Richtung von der Widerlagerplatte 34 weg, erhalten wird. Je nachdem, ob eine Vorspannung auf die Widerlagerplatte 34 zu oder von dieser weg vorgesehen ist, ist dann die Doppelkupplungsanordnung 12 bzw ein jeweiliger eine Druckplattenbaugruppe 36 oder 38 aufweisender Kupplungsbereich derselben als Normal-Geschlossen-Kupplung ausgestaltet oder als Normal-Offen-Kupplung. Aus Sicherheitsgründen ist es bei derartigen Doppelkupplungsanordnungen 12 vorteilhaft, die beiden Kupplungsbereiche bzw. deren Druckplattenbaugruppen 36 bzw. 38 so zu gestalten, dass dann, wenn keine weitere Betätigungskraft vorhanden ist, der jeweilige Kupplungsbereich in einen offenen Zustand übergeht, so dass nicht ungewollt der Zustand auftreten kann, dass über beide Kupplungsbereiche gleichzeitig ein Drehmoment übertragen wird.

Es sei weiterhin noch betont, dass, selbstverständlich auch in Abhängigkeit davon, ob eine Druckplattenbaugruppe 36 oder 38 für eine Kupplung des Normal-Offen-Typs oder des Normal-Geschlossen-Typs vorgesehen werden soll, die Kraftbeaufschlagungsanordnungen 48, 50 auch nur eine Mehrzahl von Hebelelementen umfassen können, die im Wesentlichen keine eigenständige Vorspannung in irgendeine der Betätigungsrichtungen mit sich bringen.

Die Kraftbeaufschlagungsanordnungen 48, 50 sind am jeweils zugeordneten Gehäuse 40 bzw. 42 in axialer Richtung abgestützt bzw. bezüglich diesen gehalten. Bei der Druckplattenbaugruppe 36 erfolgt dies über allgemein auch als Distanzbolzen bezeichnete Bolzenelemente 52, welche in einem Bereich radial innerhalb der Beaufschlagung der Anpressplatte 44 durch die Kraftbeaufschlagungsanordnung 48 am Gehäuse 40 festgelegt sind und die Kraftbeaufschlagungsanordnung 48, also beispielsweise eine Membranfeder oder mehrere in Umfangsrichtung aufeinander folgende Hebelelemente, unter Zwischenlagerung zweier Drahtringe axial haltern. Bei der Druckplattenbaugruppe 38 ist die Kraftbeaufschlagungsanordnung 50 im radial äußeren Bereich, also auch noch radial außerhalb der Beaufschlagung der Anpressplatte 46, beispielsweise über einen Drahtring am Gehäuse 42 abgestützt. Es sei weiterhin noch betont, dass selbstverständlich die beiden Kraftbeaufschlagungsanordnungen 48, 50 die jeweils zugeordnete Anpressplatte 44, 46 direkt oder, wie in den Figuren dargestellt, über Verschleißkompensationsanordnungen beaufschlagen können.

Jeder Druckplattenbaugruppe 36 bzw. 38 ist weiterhin eine Kupplungsscheibe 54 bzw. 56 zugeordnet. Diese Kupplungsscheiben 54, 56 weisen radial außen Reibbeläge 58, 60 auf, welche zwischen jeweiligen Reibflächen an der Widerlagerplatte 34 und den Anpressplatten 44, 46 angeordnet sind und somit zur Herstellung eines Drehmomentübertragungszustandes zwischen den jeweils zugeordneten Reibflächen klemmbar sind. Radial innen weisen die Kupplungsscheiben 54, 56 jeweilige Nabenbereiche 58, 60 auf, über welche sie durch Verzahnungen drehfest an jeweils zugeordnete Abtriebswellen 62, 64 zur Drehmomentübertragung angekoppelt werden können. Diese beiden Abtriebswellen 62, 64 können die Getriebeeingangswellen eines Getriebes sein, so dass, je nachdem, welche der Druckplattenbaugruppen 36, 38 zur Drehmomentübertragung zu nutzen ist, ein Drehmoment entweder über die koaxial innere Getriebeeingangswelle 62 oder die koaxial äußere Getriebeeingangswelle 64 in ein nicht weiter dargestelltes Getriebe eingeleitet werden kann.

Um die beiden Druckplattenbaugruppen 36 bzw. 38 bzw. die damit aufgebauten Kupplungsbereiche der Doppelkupplungsanordnung 12 zwischen einem Einrückzustand und einem Ausrückzustand betätigen zu können, ist für jede davon eine Betätigungsanordnung 66 bzw. 68 vorhanden, von welchen nur die unmittelbar mit einer jeweiligen Kraftbeaufschlagungsanordnung 48 bzw. 50 zusammenwirkenden Systemkomponenten gezeigt sind. So umfasst die Betätigungsanordnung 66 für die Druckplattenbaugruppe 36 ein Zentral in der koaxial inneren Abtriebswelle bzw. Getriebeeingangswelle 62 angeordnetes und in Richtung der Drehachse A zur Durchführung von Betätigungsvorgängen verschiebbares stangenartiges Betätigungsorgan 70, das in seinem aus der Getriebeeingangswelle 62 austretenden Ende ein topfartiges Übertragungselement 72 verschiebt. Dieses Übertragungselement 72 wiederum überträgt eine Betätigungskraft auf den radial inneren Bereich der Kraftbeaufschlagungsanordnung 48, also beispielsweise die radial inneren Enden der Federzungen einer Membranfeder oder die radial inneren Enden von Hebelelementen, um somit in dem hier dargestellten Beispiel einer Normal-Offen-Kupplung durch axiale Verschiebung dieses radial inneren Bereichs in Richtung auf die Antriebswelle 20 zu den radial äußeren Bereich der Kraftbeaufschlagungsanordnung 48 gegen die Anpressplatte 44 zu pressen und somit die Reibbeläge 58 der Kupplungsscheibe 54 zwischen dieser Anpressplatte 44 und der Widerlagerplatte 34 einzuklemmen.

Von der Betätigungsanordnung 68 für die Druckplattenbaugruppe 38 sind ein Drehentkopplungslager 74 und ein Beaufschlagungsring 76 gezeigt. Bei Verschiebung dieses Beaufschlagungsrings 76 ebenfalls in Richtung auf die Antriebswelle 20 zu presst die Kraftbeaufschlagungsanordnung 50 die Anpressplatte 46 gegen die Reibbeläge 60 der Kupplungsscheibe 56 und diese somit gegen die Widerlagerplatte 34.

Es sei hier darauf hingewiesen, dass die beiden Betätigungsanordnungen 66 bzw. 68 zur Erzeugung der jeweiligen Betätigungskraft bzw. auch zur Übertragung der Betätigungskraft auf die jeweils dargestellten Organe mit hydraulisch wirkenden oder auch mechanisch wirkenden Kraftübertragungselementen zusammenwirken können, die dann unter der Einwirkung eines Aktuatorsystems stehen, mit welchem gezielt die beiden Kupplungsbereiche bzw. deren Druckplattenbaugruppen 36, 38 angesteuert werden können.

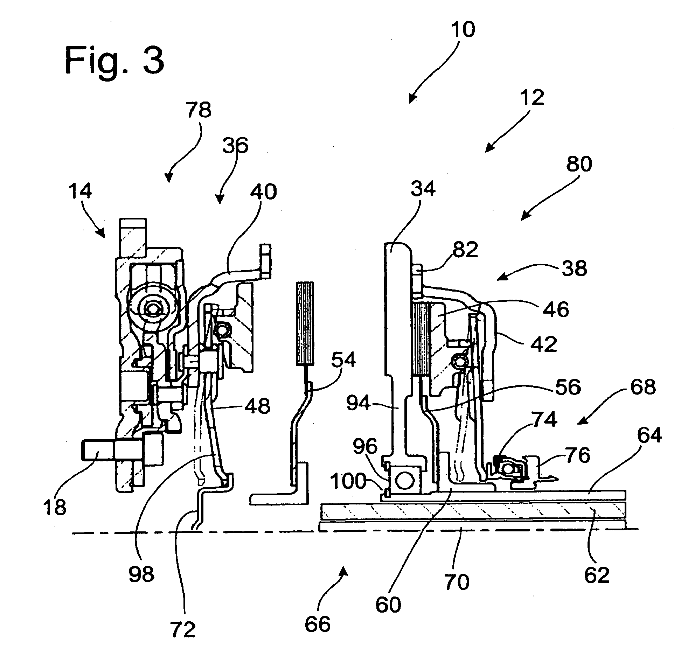

Wie im Folgenden dargelegt, ist das erfindungsgemäße Drehmomentübertragungssystem 10 so aufgebaut, dass es grundsätzlich in zwei Vormontagebaugruppen 78, 80 untergliedert werden kann. Eine erste dieser auch in Fig. 3 erkennbaren Vormontagebaugruppen 78, 80 umfasst die Schwungmassenanordnung, also das Zweimassenschwungrad 14, und die Druckplattenbaugruppe 36, welche an der dem Antriebsaggregat bzw. der Antriebswelle 20 zugewandten Seite der Widerlagerplatte 34 angeordnet ist. Auch die Kupplungsscheibe 54, welche grundsätzlich mit dem verbleibenden Bereich der Druckplattenbaugruppe 36 nicht fest verbunden ist, kann einen Teil dieser Vormontagebaugruppe 78 bilden, könnte ggf. aber auch als eigenständige Vormontagebaugruppe interpretiert werden.

Die zweite Vormontagebaugruppe 80 umfasst die Widerlagerplatte 34 und die Druckplattenbaugruppe 38, die an der den Abtriebsorganen und insbesondere einem nicht dargestellten Getriebe zugewandten axialen Seite der Widerlagerplatte 34 angeordnet ist. Hier kann beispielsweise das Gehäuse 42 der Druckplattenbaugruppe 38 in seinem radial äußeren ringartigen Bereich 82 durch Schraubbolzen o.dgl. an die Widerlagerplatte 34 angeschraubt sein, wobei in diesem Zustand dann selbstverständlich die Kupplungsscheibe 56 bereits zwischen der Anpressplatte 46 und der Widerlagerplatte 34 angeordnet ist.

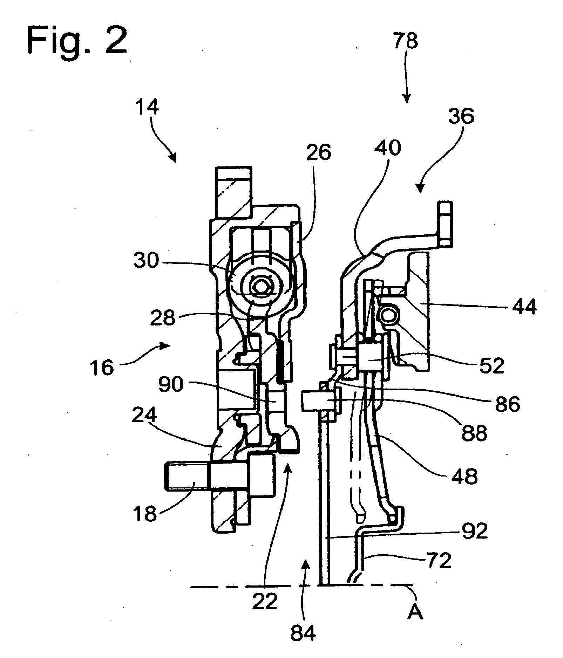

Eine detailliertere Darstellung der ersten Vormontagebaugruppe 78 ist in Fig. 2 erkennbar. Dabei ist diese Vormontagebaugruppe 78 in einem Zustand vor dem Zusammenfügen des Zweimassenschwungrads 14 mit der Druckplattenbaugruppe 36 gezeigt.

Um die Verbindung zwischen dem Zweimassenschwungrad 14 und der Druckplattenbaugruppe 36 zu erlangen, ist eine allgemein mit 84 bezeichnete Kopplungsanordnung vorgesehen. Diese umfasst im dargestellten Beispiel eine Mehrzahl von über den Umfang um die Drehachse A verteilt vorgesehen und sich beispielsweise radial oder auch mit einer zusätzlichen Umfangserstreckungskomponente erstreckenden Kopplungselementen 86. Diese sind beispielsweise aus Federblechmaterial ausgebildet und sind in ihrem radial äußeren Bereich unter Einsatz der Distanzbolzen 52 an das Gehäuse 44 fest angebunden. In ihrem radial inneren Bereich weisen die Befestigungselemente 86 ebenfalls Durchgriffsöffnungen für Befestigungsbolzen 88 auf, welche in zugehörige Öffnungen 90 des Zentralscheibenelements 28 der Sekundärseite 22 einzusetzen sind. Um hier eine definierte Positionierung der Bolzen 88 bzw. der radial inneren Enden der Kopplungselemente 86 zu erlangen, kann ein Montagering 92 vorgesehen sein, der in Zuordnung zu jedem Bolzen 88 eine Durchgangsöffnung aufweist und somit dafür sorgt, dass alle Bolzen 88 bereits in dem ein Einführen in die Öffnungen 90 des Zentralscheibenelements 28 zulassenden Relativzustand zueinander sind.

Ausgehend von der in Fig. 2 dargestellten Positionierung wird dann die Druckplattenbaugruppe 36 axial an das Zweimassenschwungrad 14 herangeführt, wobei die Bolzen 88 durch die Öffnungen 90 hindurchtreten. In der Kraftbeafschlagungsanordnung 48 einerseits und dem Deckscheibenelement 24 der Primärseite 16 andererseits sind in der Fig. 2 nicht dargestellte Durchgriffsöffnungen gebildet, durch welche ein jeweiliges Werkzeug zum Herstellen der festen Nietverbindung vermittels der Bolzen 88 hindurchgreifen kann. Insbesondere die im Deckscheibenelement 54 vorgesehenen Öffnungen werden dann, wenn, wie in den Fig. 1 und 3 erkennbar, die Bolzen 88 verformt worden sind, durch Verschlusselemente abgeschlossen, um den zwischen den Deckscheibenelementen 24, 26 gebildeten Raum dicht abzuschließen. Durch diese Öffnungen hindurch könnte ggf. dann auch das Zweimassenschwungrad 14 mit viskosem Medium gefüllt werden.

Durch den Einsatz der Kopplungsanordnung 84 mit den axial federnd bzw. axial elastischen Kopplungselementen 86, die zum Unterstützen dieser axialen Elastizität auch axial abgekröpft sein können, wird im Verbindungsweg zwischen dem Zweimassenschwungrad 14 und der Druckplattenbaugruppe 36 eine Relativbewegbarkeit eingeführt, welche es zulässt, dass im gesamten Antriebsstrang auftretende Fertigungstoleranzen in axialer Richtung kompensiert werden können. Auf Grund dieser elastischen Anbindung der Druckplattenbaugruppe 36 und mithin der gesamten Doppelkupplungsanordnung 12 an das Zweimassenschwungrad 14 ist es jedoch erforderlich, für die Doppelkupplungsanordnung 12 an anderer Stelle eine insbesondere deren Radialpositionierung bezüglich der Drehachse A fest vorgebende Abstützung zu erlangen. Wie man in den Fig. 1 und 3 erkennt, weist hierfür die Widerlagerplatte 34 einen radial inneren Lagerungsbereich 94 auf, in welchem diese über ein Drehentkopplungslager 96 auf der koaxial äußeren Getriebeeingangswelle 64 drehbar gelagert ist. Hier kann für das Drehentkopplungslager 96 an der Getriebeeingangswelle 64 eine definierte axiale Positionierung durch entsprechende Anschläge vorgegeben sein, so dass für die Widerlagerplatte 34 nicht nur eine definierte Radialpositionierung vorgegeben ist, sondern für diese und damit auch die gesamte Doppelkupplungsanordnung 12 auch eine definierte axiale Positionierung bezüglich der Getriebeeingangswelle 64 und mithin bezüglich des gesamten Getriebes vorgegeben ist.

Bei diesem Aufbau, bei welchem also einerseits das Zweimassenschwungrad 14 durch die in Fig. 1 erkennbaren Schraubbolzen 18 fest und somit in definierter Axialpositionierung an der Antriebswelle 20 angebracht ist und andererseits die Doppelkupplungsanordnung 12 über das Drehentkopplungslager 96 definiert axial bezüglich der Gewebeeingangswelle 64 gehalten ist, kommt die axiale Elastizität der Kopplungsanordnung 84 besonders vorteilhaft zum Tragen, da beim Einbau eines Getriebes einerseits und eines Antriebsaggregats andererseits selbstverständlich gewisse Fertigungs- bzw. Einbautoleranzen zu erwarten sind. Beim Aufbau eines Antriebsstrangs mit einer erfindungsgemäßen Drehmomentübertragungsanordnung kann so vorgegangen werden, wie dies in Fig. 3 angedeutet ist. Es werden also zunächst die beiden Vormontagebaugruppen 78 und 80 bereitgestellt, wobei die erste Vormontagebaugruppe 78 beispielsweise auch mit der Kupplungsscheibe 54 zusammengefasst werden kann. Dabei kann auch das Übertragungselement 72 der Betätigungsanordnung 66 bereits in den axialen Bauweg eingegliedert werden. Die erste Vormontagebaugruppe 78 wird dann durch die Schraubbolzen 18 an die Antriebswelle 20 angeschraubt, wobei hierfür in der Kraftbeaufschlagungsanordnung 48 Durchgriffsöffnungen 98 für ein auf die Schraubbolzen 18 einwirkendes Werkzeug bereitgestellt ist. In dieser Phase ist dies leicht möglich, da insbesondere dann, wenn die Kupplungsscheibe 54 noch nicht an die Druckplattenbaugruppe 36 herangeführt ist, hier grundsätzlich axialer Zugriff vorhanden ist. Dabei kann beispielsweise auch vorgesehen sein, dass die Öffnungen 98 so dimensioniert sind, dass zwar ein Schraubwerkzeug hindurchgeführt werden kann, die Schraubbolzen 18 jedoch nicht dadurch heraustreten können. Auf diese Art und Weise dient im zusammengefügten Zustand der ersten Vormontagebaugruppe 78 die Kraftbeaufschlagungsanordnung 48 als Verliersicherung für die Schraubbolzen 18.

Die zweite Vormontagebaugruppe 80 wird mit dem Getriebe zusammengefasst, indem sie axial auf die Getriebeeingangswellen 62, 64 aufgeschoben wird. Dies bedeutet selbstverständlich, dass die in Fig. 3 auch erkennbaren Baugruppen 74, 76 der Betätigungsanordnung 68 eingebracht werden müssen, und dass die Kupplungsscheibe 56 mit ihrem Nabenbereich 60 auf die koaxial äußere Getriebeeingangswelle 64 aufgeschoben und dabei mit dieser zur gemeinsamen Drehung gekoppelt wird. Weiterhin wird die Widerlagerplatte 34 mit ihrem radial inneren Lagerungsbereich 94 bzw. dem Drehentkopplungslager 96 auf die koaxial äußere Getriebeeingangswelle 64 aufgeschoben und nachfolgend durch einen Sicherungsring 100 axial an dieser fixiert. Wie bereits vorangehend ausgeführt, kann hier vorgesehen sein, dass die Widerlagerplatte 34 in beiden axialen Richtungen bezüglich der Getriebeeingangswelle 64 festgehalten ist, was insbesondere daher vorteilhaft ist, da auf diese Art und Weise eine definierte und durch irgendwelche Axialbewegungen der Widerlagerplatte 34 nicht beeinflusste Wirksamkeit der Betätigungsanordnung 68 für die Druckplattenbaugruppe 38 sichergestellt werden kann. Grundsätzlich ist es, je nach Ausgestaltung der Betätigungsanordnung 68, aber auch denkbar, dass das Drehentkopplungslager 96 ein gewisses Axialbewegungsspiel auf der Getriebeeingangswelle 64 hat, so dass auch in diesem Bereich der Ausgleich axialer Fertigungstoleranzen bzw. Montagetoleranzen ermöglicht ist.

Nachdem die beiden Vormontagebaugruppen 78, 80 so wie vorangehend beschrieben in das System eingegliedert worden sind, wird dann beispielsweise durch Heranführen des Antriebsaggregats an den verbleibenden Teil des Antriebsstrangs auch eine Verbindung zwischen diesen beiden Vormontagebaugruppen 78, 80 hergestellt. Hierzu wird zunächst beim axialen Heranführen die Kupplungsscheibe 54 auf die koaxial innere Getriebeeingangswelle 62 aufgeschoben und somit in Drehmomentübertragungskopplung mit dieser gebracht. Daraufhin tritt die Druckplattenbaugruppe 36 zusammen mit dem Übertragungselement 72 axial an den verbleibenden Teil der Doppelkupplungsanordnung 12 heran, bis im radial äußeren Bereich das Gehäuse 40 in Anlage an der Widerlagerplatte 34 kommt. Ähnlich wie das Gehäuse 42 kann auch das Gehäuse 40 dann durch Schraubbolzen an der Widerlagerplatte 34 festgelegt werden, wodurch der Montagevorgang im Wesentlichen beendet wird. Bei diesem Montagevorgang können insbesondere auf Grund der axialen Elastizität im Bereich der Kopplungsanordnung 84 dann Toleranzen im gegenseitigen Abstand zwischen einem Antriebsaggregat und einem Getriebe ausgeglichen werden.

Es sei hier darauf hingewiesen, dass die Kopplungsanordnung 84 mit ihren axial elastischen Kopplungelementen 86 selbstverständlich auch in anderer Art und Weise ausgeführt sein kann. So könnten beispielsweise all diese Kopplungselemente 86 Teil eines ringartig ausgestalteten, integralen Bauteils sein, das mit seinem radial innen liegenden ringartigen Bereich an die Sekundärseite 22 angebunden wird und mit seinen nach radial außen und ggf. auch in Umfangsrichtung greifenden Federabschnitten dann an dem Gehäuse 40 der Druckplattenbaugruppe 36 festgelegt wird. Selbstverständlich könnte ein derartiger ringartiger Bereich auch oder alternativ am radial äußeren Bereich vorgesehen sein.

Weiterhin sei darauf hingewiesen, dass selbstverständlich das Aufgliedern der Drehmomentübertragungsanordnung in die beiden Vormontagebaugruppen 78, 80 auch dann realisiert sein kann, wenn innerhalb der Vormontagebaugruppe 78 nicht die vorangehend beschriebene axial elastische Kopplungsanordnung 84 wirksam ist, sondern eine auch axial im Wesentlichen starre Verbindung zwischen der Druckplattenbaugruppe 36 und der Schwungmassenanordnung, also im dargestellten Beispiel dem Zweimassenschwungrad 14, hergestellt wird. Sofern erforderlich, können axiale Toleranzen dann insbesondere auch dadurch noch kompensiert werden, dass, wie vorangehend dargelegt, die Widerlagerplatte 34 in gewissem Ausmaß axial bezüglich der Getriebeeingangswelle 64 bewegbar ist.

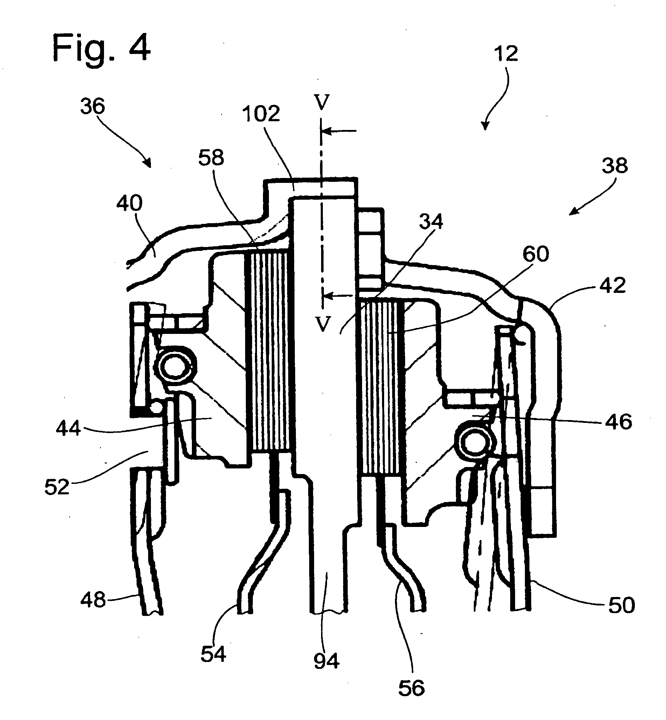

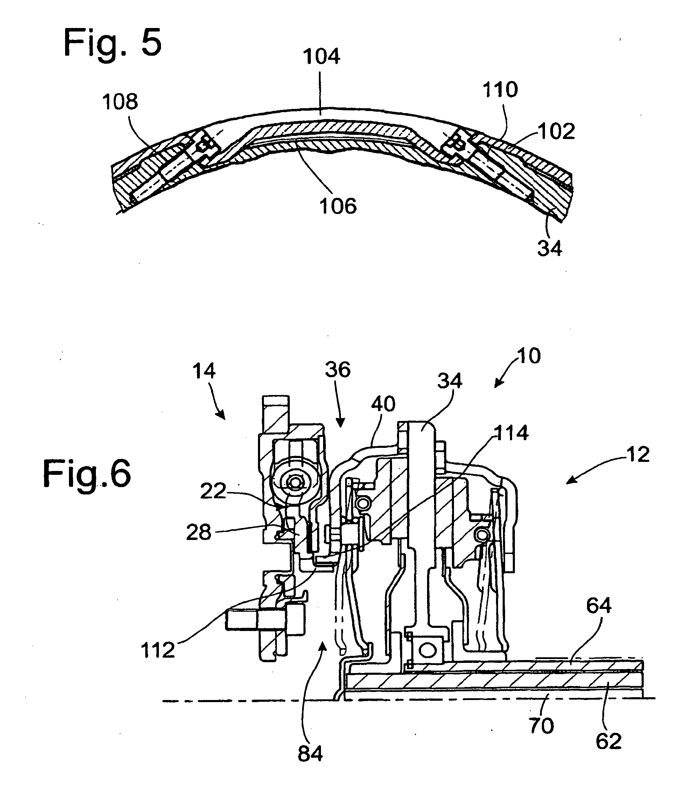

Eine Abwandlung der vorangehend beschriebenen Drehmomentübertragungsanordnung 10 insbesondere im Bereich der Doppelkupplungsanordnung 12 ist in den Fig. 4 und 5 erkennbar. Diese Abwandlung betrifft vor allem die Art und Weise, wie das Gehäuse 40 der antriebsseitigen Druckplattenbaugruppe 36 an die Widerlagerplatte 34 angebunden ist.

Man erkennt in Fig. 4, dass das Gehäuse 40 in seinem radial äußeren und an die Widerlagerplatte 34 anzubindenden Bereich zumindest in einigen Umfangsabschnitten die Widerlagerplatte 34 axial übergreifende Befestigungsabschnitte 102 umfasst, welche selbstverständlich auch durch einen in Umfangsrichtung umlaufenden, ringartigen Bereich bereitgestellt sein können. In diesem die Widerlagerplatte 34 axial übergreifenden Bereich ist dann das Gehäuse 40 und somit die Druckplattenbaugruppe 36 an der Widerlagerplatte 34 festgelegt. Hierzu erkennt man in Fig. 5, dass in dem oder jedem derartigen Bereich 102 eine nach radial innen gerichtete Einformung 104 vorhanden ist, die in eine entsprechende Aussparung 106 am radial äußeren Umfangsbereich der Widerlagerplatte 34 eingreift. Auf diese Art und Weise kann beispielsweise eine definierte Umfangspositionierung und auch eine formschlüssige Umfangshalterung der Druckplattenbaugruppe 36 bezüglich der Widerlagerplatte 34 erlangt werden. In diese Einformung 104 werden dann von radial außen und mit Tangentialrichtung Schraubbolzen 108, 110 eingeführt, welche Öffnungen im Bereich 102 durchsetzen und in zugehörige Gewindeöffnungen in der Widerlagerplatte 34 eingeschraubt sind. Durch die dargestellte Positionierung ist sichergestellt, dass die Schraubbolzen 108, 110 nicht über den äußeren Umfangsbereich des Gehäuses 40 überstehen, so dass der nach radial außen hin beanspruchte Bauraum nicht weiter ausgedehnt wird. Dadurch, dass Schraubbolzen 108 und 110 vorgesehen sind, die in Umfangsrichtung einander im Wesentlichen entgegengesetzt wirken, ist sichergestellt, dass eine in beiden Drehmomentübertragungsrichtungen gleichmäßig stabile Verbindung zwischen dem Gehäuse 40 und der Widerlagerplatte 34 realisiert ist. Es ist selbstverständlich, dass über den Umfang verteilt mehrere derartige Paare von Schraubbolzen 108, 110 in jeweiligen zugeordneten Einformungen 104 vorgesehen sein können, um insbesondere eine symmetrische und Unwuchten vermeidende Verbindung zu schaffen.

Eine weitere Ausgestaltungsvariante einer erfindungsgemäßen Drehmomentübertragungsanordnung 10 ist in Fig. 6 dargestellt. Diese entspricht in wesentlichen Aspekten insbesondere hinsichtlich des Aufbaus der Doppelkupplungsanordnung 12 und des Zweimassenschwungrads 14 dem vorangehend beschriebenen Aufbau, so dass auf die diesbezüglichen Ausführungen verwiesen ist. Ein Unterschied besteht jedoch hier in der Ausgestaltung der Kopplungsanordnung 84. Diese umfasst an dem Torsionsschwingungsdämpfer 12, insbesondere dem Zentralscheibenelement 28 der Sekundärseite 22 desselben, und am Gehäuse 40 der antriebsseitigen Druckplattenbaugruppe 36 jeweilige Verzahnungen 112, 114. Diese Verzahnungen 112, 114 können integral an das Zentralscheibenelement 28 bzw. das Gehäuse 40 angeformt sein, können selbstverständlich aber auch durch separate an diesen Bauteilen jeweils angebrachte Elemente bereitgestellt werden. Beim Aufbau eines Antriebsstrangs werden diese beiden Verzahnungen axial ineinander eingeschoben, so dass sie durch den hergestellten Kämmeingriff eine Drehmomentübertragung ermöglichen, gleichzeitig jedoch aber auch eine Axialbewegbrakeit zwischen der Doppelkupplugsanordnung 12 und dem Zweimassenschwungrad 14 zulassen. Es sei hier darauf hingewiesen, dass selbstverständlich die Verzahnungen 112, 114 in verschiedener Weise ausgeführt sein können. Während in Fig. 6 ein Beispiel mit Stirnverzahnungen, also nach radial innen bzw. radial außen gerichteten Zähnen erkennbar ist, ist es auch möglich, axial gerichtete Verzahnungen, also nach Art von Hirthverzahnungen aufgebaute Verzahnungen, einzusetzen.

Bei der in Fig. 6 dargestellten Ausgestaltungsform kann selbstverständlich vorgesehen sein, beim Aufbau eines Antriebsstrangs die vorangehend beschriebenen Vormontagebaugruppen 78, 80 bereitzustellen. Hier ist es alternativ aber auch möglich, dass die Montage derart erfolgt, dass zunächst das Zweimassenschwungrad 14 an der Antriebswelle 20 festgelegt wird, während die in Fig. 3 als Vormontagebaugruppe 80 bezeichnete Baugruppe mit dem Getriebe gekoppelt wird und dabei insbesondere auch das Drehentkopplungslager 96 an der Getriebeeingangswelle 64 festgelegt wird. Daraufhin kann dann die Druckplattenbaugruppe 36 an der Widerlagerplatte 34 angebracht werden, noch bevor das Antriebsaggregat mit dem daran bereits angebrachten Zweimassenschwungrad 14 dann axial herangeführt und der Kämmeingriff zwischen den Verzahnungen 112, 114 hergestellt wird.

## Patentansprüche

1. Drehmomentübertragungsanordnung für den Antriebsstrang eines Fahrzeugs, umfassend:
- eine Doppelkupplungsanordnung (12) mit einer zentralen Widerlagerplatte (34) und an beiden axialen Seiten der Widerlagerplatte (34) jeweils einer Druckplattenbaugruppe (36, 38), wobei jede Druckplattenbaugruppe (36, 38) ein an der Widerlagerplatte (34) festgelegtes oder festzulegendes Gehäuse (40, 42), eine bezüglich des Gehäuses (40, 42) im Wesentlichen drehfest und axial bewegbar gehaltene Anpressplatte (44, 46), sowie eine bezüglich der Anpressplatte (44, 46) und des Gehäuses (40, 42) abgestützte Kraftbeauschlagungsanordnung (48, 50) umfasst, ferner umfassend in Zuordnung zu jeder Druckplattenbaugruppe (36, 38) eine an ein Abtriebsorgan (62, 64) angekoppelte oder anzukoppelnde Kupplungsscheibe (54, 56), welche bei Beaufschlagung der Anpressplatte (44, 46) durch die Kraftbeaufschlagungsanordnung (48, 50) gegen die Widerlagerplatte (34) pressbar ist,
- eine Schwungmassenanordnung (14), über welche ein Drehmoment zwischen einem Antriebsorgan (20) und der Doppelkupplungsanordnung (12) zu übertragen ist,
wobei das Gehäuse (40) der antriebsseitig bezüglich der Widerlagerplatte (34) positionierten oder zu positionierenden Druckplattenbaugruppe (36) über eine eine Relativaxialbewegung zwischen der Schwungmassenanordnung (14) und der Druckplattenbaugruppe (36) zulassende elastische Kopplungsanordnung (84) mit der Schwungmassenanordnung (14) gekoppelt oder koppelbar ist,
**dadurch gekennzeichnet, dass**
die Kopplungsanordnung (84) eine Mehrzahl von an der Schwungmassenanordnung (14) und dem Gehäuse (40) der antriebsseitigen Druckplattenbaugruppe (36) festgelegten und dazwischen axial elastisch verformbaren Kopplungselementen (86) umfasst, wobei die Kopplungselemente (86) durch Bolzen (52) an dem Gehäuse (40) festgelegt sind, welche ferner der axialen Halterung der Kraftbeaufschlagungsanordnung (48) bezüglich des Gehäuses (40) dienen.

2. Drehmomentübertragungsanordnung nach Anspruch 1,
**dadurch gekennzeichnet, dass** die Kopplungselemente (86) blattfederartig ausgebildet sind.

3. Drehmomentübertragungsanordnung nach einem der Ansprüche 1 oder 2,
**dadurch gekennzeichnet, dass** die Widerlagerplatte (34) in einem radial inneren Bereich einen Lagerungsabschnitt (94) aufweist, in welchem diese an einem an eine der Kupplungsscheiben (54, 56) angekoppelten oder anzukoppelnden Abtriebsorgan (64) drehbar gelagert ist.

4. Drehmomentübertragungsanordnung nach einem der Ansprüche 1 bis 3,
**dadurch gekennzeichnet, dass** das Gehäuse (40) der antriebsseitigen Druckplattenbaugruppe (36) in einem die Widerlagerplatte (34) radial außen übergreifenden Bereich (102) an dieser festgelegt oder festzulegen ist.

5. Drehmomentübertragungsanordnung nach einem der Ansprüche 1 bis 4,
**dadurch gekennzeichnet, dass** die Schwungmassenanordnung (14) ein Zweimassenschwungrad mit einer an dem Antriebsorgan (20) festzulegenden oder festgelegten Primärseite (16) und einer mit dem Gehäuse (40) der antriebsseitigen Druckplattenbaugruppe (36) über die Kopplungsanordnung (84) gekoppelten oder zu koppelnden Sekundärseite (22) sowie einer zwischen Primärseite (16) und Sekundärseite (22) wirkenden Dämpferelementenanordnung (30) umfasst.

6. Drehmomentübertragungsanordnung nach einem der Ansprüche 1 bis 5,
**dadurch gekennzeichnet, dass** für jede Druckplattenbaugruppe (36, 38)eine auf die Kraftbeaufschlagungsanordnung (48, 50) derselben einwirkende Betätigungsanordnung (66, 68) vorgesehen ist, wobei die Betätigungsanordnung (66) für die antriebsseitige Druckplattenbaugruppe (36) ein Betätigungsorgan (70) umfasst, das in einem an die Kupplungsscheibe (54) für diese Druckplattenbaugruppe (36) angekoppelten oder anzukoppelnden Antriebsorgan (62) bewegbar ist.

7. Drehmomentübertragungsanordnung nach einem der Ansprüche 1 bis 6,
**dadurch gekennzeichnet, dass** sie in zwei Vormontagebaugruppen (78, 80) unterteilt ist, wobei eine erste Vormontagebaugruppe (78) die Schwungmassenanordnung (14) und die antriebsseitige Druckplattenbaugruppe (36) umfasst und eine zweite Vormontagebaugruppe (80) die Widerlagerplatte (34) und die abtriebsseitige Druckplattenbaugruppe (38) umfasst.

8. Verfahren zum Aufbau eines Antriebsstrangs für ein Fahrzeug, welcher Antriebsstrang ein Antriebsaggregat mit einer Antriebswelle (20), eine Getriebeanordnung mit zwei Getriebeeingangswellen (62, 64) und eine Drehmomentübertragungsanordnung (10) nach Anspruch 7, sofern dessen Merkmale zumindest mit den Merkmalen des Anspruchs 1 kombiniert sind, zur Drehmomentübertragung zwischen der Antriebswelle (20) und den beiden Getriebeeingangswellen (62, 64) umfasst, wobei das Verfahren die Maßnahmen aufweist:
a) Ankoppeln der ersten Vormontagebaugruppe (78) im Bereich der Schwungmassenanordnung (14) an die Antriebswelle (20);
b) Ankoppeln der zweiten Vormontagebaugruppe (80) an eine (64)der Getriebeeingangswellen (62, 64);
c) nach Durchführung der Maßnahmen a) und b), Verbinden des Gehäuses (40) der Druckplattenbaugruppe (36) der ersten Vormontagebaugruppe (78) mit der Widerlagerplatte (34) und Ankoppeln der Kupplungsscheibe (54) für die Druckplattenbaugruppe (36) der ersten Vormontagebaugruppe (78) an die andere Getriebeeingangswelle (62).

9. Verfahren nach Anspruch 8,
**dadurch gekennzeichnet, dass** die Maßnahme b) das Ankoppeln der Kupplungsscheibe (56) für die Druckplattenbaugruppe (36) der zweiten Vormontagebaugruppe (80) an die eine Getriebeeingangswelle (64)und das Herstellen einer Lagerungsabstützung der Widerlagerplatte (34) an dieser Getriebeeingangswelle (64) umfasst.

## Claims

1. Torque transmission arrangement for the drive train of a vehicle, comprising:
- a double-clutch arrangement (12) having a central abutment plate (34) and in each case one pressure-plate assembly (36, 38) on both axial sides of the abutment plate (34), each pressure-plate assembly (36, 38) comprising a housing (40, 42) which is fixed or can be fixed on the abutment plate (34), a pressing plate (44, 46) which is held such that it is substantially fixed rotationally and can be moved axially with regard to the housing (40, 42), and a force loading arrangement (48, 50) which is supported with regard to the pressing plate (44, 46) and the housing (40, 42), furthermore comprising, in a manner which is assigned to each pressure-plate assembly (36, 38), a clutch plate (54, 56) which is coupled or can be coupled to an output member (62, 64) and can be pressed against the abutment plate (34) when the pressing plate (44, 46) is loaded by the force loading arrangement (48, 50),
- a flywheel-mass arrangement (14), via which a torque can be transmitted between a drive member (20) and the double-clutch arrangement (12), wherein the housing (40) of the pressure-plate assembly (36) which is positioned or can be positioned on the drive side with regard to the abutment plate (34) is coupled or can be coupled to the flywheel-mass arrangement (14) via an elastic coupling arrangement (84) which permits a relative axial movement between the flywheel-mass arrangement (14) and the pressure-plate assembly (36),
**characterized in that** the coupling arrangement (84) comprises a plurality of coupling elements (86) which are fixed on the flywheel-mass arrangement (14) and the housing (40) of the drive-side pressure-plate assembly (36) and can be elastically deformed axially between them, wherein the coupling elements (86) are fixed on the housing (40) by bolts (52) which serve, furthermore, to secure the force loading arrangement (48) axially with regard to the housing (40).

2. Torque transmission arrangement according to Claim 1, **characterized in that** the coupling elements (86) are of leaf-spring-like configuration.

3. Torque transmission arrangement according to either one of Claims 1 and 2, **characterized in that**, in a radially inner region, the abutment plate (34) has a mounting section (94), in which the said abutment plate (34) is mounted rotatably on an output member (64) which is coupled or can be coupled to one of the clutch plates (54, 56).

4. Torque transmission arrangement according to one of Claims 1 to 3, **characterized in that**, in a region (102) which reaches over the abutment plate (34) radially to the outside, the housing (40) of the drive-side pressure-plate assembly (36) is fixed or can be fixed to the said abutment plate (34).

5. Torque transmission arrangement according to one of Claims 1 to 4, **characterized in that** the flywheel-mass arrangement (14) comprises a two-mass flywheel with a primary side (16) which can be fixed or is fixed to the drive member (20), a secondary side (22) which is coupled or can be coupled via the coupling arrangement (84) to the housing (40) of the drive-side pressure-plate assembly (36), and a damper-element arrangement (30) which acts between the primary side (16) and the secondary side (22).

6. Torque transmission arrangement according to one of Claims 1 to 5, **characterized in that**, for each pressure-plate assembly (36, 38), an actuating arrangement (66, 68) is provided which acts on the force loading arrangement (48, 50) of the said pressure-plate assembly (36, 38), the actuating arrangement (66) comprising an actuating member (70) for the drive-side pressure-plate assembly (36), which actuating member (70) can be moved in a drive member (62) which is coupled or can be coupled to the clutch plate (54) for the said pressure-plate assembly (36).

7. Torque transmission arrangement according to one of Claims 1 to 6, **characterized in that** it is divided into two pre-mounting assemblies (78, 80), a first pre-mounting assembly (78) comprising the flywheel-mass arrangement (14) and the drive-side pressure-plate assembly (36) and a second pre-mounting assembly (80) comprising the abutment plate (34) and the output-side pressure-plate assembly (38).

8. Method for constructing a drive train for a vehicle, which drive train comprises a drive assembly with a drive shaft (20), a transmission arrangement with two transmission input shafts (62, 64) and a torque transmission arrangement (10) according to Claim 7, provided that its features are combined at least with the features of Claim 1, for the transmission of torque between the drive shaft (20) and the two transmission input shafts (62, 64), the method having the following features:
a) coupling of the first pre-mounting assembly (78) to the drive shaft (20) in the region of the flywheel-mass arrangement (14);
b) coupling of the second pre-mounting assembly (80) to one (64) of the transmission input shafts (62, 64) ;
c) after measures a) and b) are carried out, connecting of the housing (40) of the pressure-plate assembly (36) of the first pre-mounting assembly (78) to the abutment plate (34), and coupling of the clutch plate (54) for the pressure-plate assembly (36) of the first pre-mounting assembly (78) to the other transmission input shaft (62).

9. Method according to Claim 8, **characterized in that** measure b) comprises coupling of the clutch plate (56) for the pressure-plate assembly (36) of the second pre-mounting assembly (80) to one transmission input shaft (64) and producing of a mounting support of the abutment plate (34) to the said transmission input shaft (64).

## Revendications

1. Agencement de transmission de couple pour la chaîne cinématique d'un véhicule, comprenant :
- un agencement de double embrayage (12) avec un plateau de butée central (34) et à chaque fois un module de plaque de pression (36, 38) sur les deux côtés axiaux du plateau de butée (34), chaque module de plaque de pression (36, 38) comprenant un boîtier (40, 42) fixé ou pouvant être fixé sur le plateau de butée (34), un plateau de pressage (44, 46) maintenu de manière essentiellement solidaire en rotation et déplaçable axialement par rapport au boîtier (40, 42), ainsi qu'un agencement de sollicitation par force (48, 50) supporté par rapport au plateau de pressage (44, 46) et au boîtier (40, 42), comprenant en outre en association avec chaque module de plaque de pression (36, 38) un disque d'embrayage (54, 56) accouplé ou pouvant être accouplé à un organe de prise de force (62, 64), lequel disque d'embrayage, lors de la sollicitation du plateau de pressage (44, 46), peut être pressé par l'agencement de sollicitation par force (48, 50) contre le plateau de butée (34),
- un agencement de masse d'inertie (14) par le biais duquel un couple peut être transmis entre un organe d'entraînement (20) et l'agencement de double embrayage (12),
le boîtier (40) du module de plaque de pression (36) positionné ou pouvant être positionné du côté de l'entraînement par rapport au plateau de butée (34) étant accouplé ou pouvant été accouplé à l'agencement de masse d'inertie (14) par le biais d'un agencement d'accouplement (84) élastique autorisant un mouvement axial relatif entre l'agencement de masse d'inertie (14) et le module de plaque de pression (36), **caractérisé en ce que** l'agencement d'accouplement (84) comprend une pluralité d'éléments d'accouplement (86) fixés sur l'agencement de masse d'inertie (14) et le boîtier (40) du module de plaque de pression (36) du côté de l'entraînement et déformables élastiquement axialement entre eux les éléments d'accouplement (86) sont fixés par des boulons (52) sur le boîtier (40), lesquels servent en outre à la fixation axiale de l'agencement de sollicitation par force (48) par rapport au boîtier (40).

2. Agencement de transmission de couple selon la revendication 1,
**caractérisé en ce que** les éléments d'accouplement (86) sont réalisés sous forme de ressorts à lames.

3. Agencement de transmission de couple selon l'une quelconque des revendications 1 ou 2,
**caractérisé en ce que** le plateau de butée (34) présente, dans une région radialement interne, une portion de support sur palier (94) dans laquelle celle-ci est supportée à rotation sur un organe de prise de force (64) accouplé ou pouvant être accouplé à l'un des disques d'embrayage (54, 56).

4. Agencement de transmission de couple selon l'une quelconque des revendications 1 à 3,
**caractérisé en ce que** le boîtier (40) du module de plaque de pression (36) du côté de l'entraînement est fixé ou peut être fixé au plateau de butée (34) dans une région (102) venant en prise radialement à l'extérieur par le dessus avec le plateau de butée (34).

5. Agencement de transmission de couple selon l'une quelconque des revendications 1 à 4,
**caractérisé en ce que** l'agencement de masse d'inertie (14) comprend un volant d'inertie à deux masses avec un côté primaire (16) fixé ou pouvant être fixé sur l'organe d'entraînement (20), et un côté secondaire (22) accouplé ou pouvant être accouplé au boîtier (40) du module de plaque de pression (36) du côté de l'entraînement par le biais de l'agencement d'accouplement (84), ainsi qu'un agencement d'éléments d'amortissement (30) agissant entre le côté primaire (16) et le côté secondaire (22).

6. Agencement de transmission de couple selon l'une quelconque des revendications 1 à 5,
**caractérisé en ce que** pour chaque module de plaque de pression (36, 38) est prévu un agencement d'actionnement (66, 68) agissant sur l'agencement de sollicitation par force (48, 50) de celui-ci, l'agencement d'actionnement (66) pour le module de plaque de pression (36) du côté de l'entraînement comprenant un organe d'actionnement (70) qui peut être déplacé dans un organe d'entraînement (62) accouplé ou pouvant être accouplé au disque d'embrayage (54) pour ce module de plaque de pression (36).

7. Agencement de transmission de couple selon l'une quelconque des revendications 1 à 6,
**caractérisé en ce qu'**il est divisé en deux modules de prémontage (78, 80), un premier module de prémontage (78) comprenant l'agencement de masse d'inertie (14) et le module de plaque de pression (36) du côté de l'entraînement, et un deuxième module de prémontage (80) comprenant le plateau de butée (34) et le module de plaque de pression (38) du côté de la prise de force.

8. Procédé pour assembler une chaîne cinématique d'un véhicule, laquelle chaîne cinématique comprend un ensemble d'entraînement avec un arbre d'entraînement (20), un agencement de transmission avec deux arbres d'entrée de transmission (62, 64), et un agencement de transmission de couple (10) selon la revendication 7, dans la mesure où ses caractéristiques sont combinées au moins avec les caractéristiques de la revendication 1, pour la transmission de couple entre l'arbre d'entraînement (20) et les deux arbres d'entrée de transmission (62, 64), le procédé présentant les mesures suivantes :
a) accouplement du premier module de prémontage (78) dans la région de l'agencement de masse d'inertie (14) à l'arbre d'entraînement (20) ;
b) accouplement du deuxième module de prémontage (80) à l'un (64) des arbres d'entrée de transmission (62, 64) ;
c) après la mise en oeuvre des mesures a) et b), connexion du boîtier (40) du module de plaque de pression (36) du premier module de prémontage (78) au plateau de butée (34) et accouplement du disque d'embrayage (54) pour le module de plaque de pression (36) du premier module de prémontage (78) à l'autre arbre d'entrée de transmission (62).

9. Procédé selon la revendication 8,
**caractérisé en ce que** la mesure b) comprend l'accouplement du disque d'embrayage (56) pour le module de plaque de pression (36) du deuxième module de prémontage (80) à l'un des arbres d'entrée de transmission (64) et la création d'un support sur palier du plateau de butée (34) au niveau de cet arbre d'entrée de transmission (64).
